# EUROPÄISCHE PATENTSCHRIFT

(11) **EP 3 453 567 B1**
(45) Veröffentlichungstag und Bekanntmachung des Hinweises auf die Patenterteilung: **15.12.2021**
(21) Anmeldenummer: 17190173.9
(22) Anmeldetag: 08.09.2017
(51) Int. Cl.: B60P 3/025, B60P 3/14, B60P 3/32, B60W 50/00, G01C 21/34, B60W 30/02

(54) **FAHRERASSISTENZSYSTEM, SERVICEMOBIL UND VERFAHREN ZUR UNTERSTÜTZUNG EINER ERBRINGUNG EINER VORDEFINIERTEN DIENSTLEISTUNG IN EINEM FAHRZEUG WÄHREND EINER FAHRT DES SERVICEMOBILS**
DRIVER ASSISTANCE SYSTEM, SERVICE MOBILE AND METHOD FOR SUPPORTING THE PROVISION OF A PREDEFINED SERVICE IN A VEHICLE DURING THE MOVEMENT OF A SERVICE MOBILE
SYSTÈME D'AIDE À LA CONDUITE, VÉHICULE DE SERVICE ET PROCÉDÉ D'AIDE À UNE PRESTATION DE SERVICE PRÉDÉFINIE DANS UN VÉHICULE PENDANT LE DÉPLACEMENT DU VÉHICULE DE SERVICE

(43) Veröffentlichungstag der Anmeldung: 13.03.2019
(73) Patentinhaber: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(56) Entgegenhaltungen:
- DE-A1-102016 209 099
- US-A1- 2009 164 063
- US-A1- 2017 016 733
- US-A1- 2017 102 700
- US-A1- 2017 113 702

## Beschreibung

### Stand der Technik

Die vorliegende Erfindung betrifft ein Fahrerassistenzsystem, ein Computerprogrammprodukt, eine Signalfolge, ein Fahrzeug sowie ein Verfahren zur Unterstützung einer Erbringung einer vordefinierten Dienstleistung in einem Fahrzeug während einer Fahrt des Fahrzeugs auf einer bevorstehenden Route. Insbesondere betrifft die vorliegende Erfindung eine Verbesserung bzw. Ermöglichung der Erbringung einer Dienstleistung während der Fahrt eines Fahrzeugs unter kritischen Umständen.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter stationärer Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafenparkplatz) definiert und der Fahrer den mobilen Friseursalon zu dem definierten Ziel fährt, um dort die Dienstleistung zu erbringen.

US 2017/0102700 A1 offenbart ein Verfahren sowie eine Vorrichtung zum Bereitstellen einer situationsgerechten Übergabe der Fahrzeugführungsverantwortung an einen Fahrer. Wenn der Fahrer einer Tätigkeit nachgeht, welche während einer Wahrnehmung der Fahrzeugführung nicht oder nur schlecht fortgeführt werden kann, werden automatische Maßnahmen eingeleitet, um einen vordefinierten Übergabezeitpunkt zu vertagen. Beispielsweise wird die Fahrt verlangsamt, eine alternative Route befahren oder ein vorübergehender Stopp eingeleitet. Somit kann die Übergabe der Fahrzeugführung zu einem späteren Zeitpunkt stattfinden, wenn der Insasse seine Tätigkeit beendet hat.

In Fortbewegungsmitteln angebotene Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für eine vielköpfige Kundschaft zu hoch ist. In Fortbewegungsmitteln angebotene Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

DE 10 2016 209 099 A1 offenbart ein flexibles Personenkraftfahrzeug mit einer Fahrgastzelle und einem Antriebsmittel, wobei die Fahrgastzelle mindestens ein Abstützmittel und ein Fahrgastzellenverbindungsmittel aufweist und das Antriebsmittel ein Antriebsverbindungsmittel aufweist, wobei die Fahrgastzelle und das Antriebsmittel zeitweise voneinander getrennt sind.

US 2017/0102700 A1 offenbart ein Verfahren zur Verlängerung eines Erreichens eines Übergabepunktes, bei dem nach Beendigung einer Dienstleistung ein Wechsel von einem automatisierten zu einem manuellen Fahrmodus erfolgt.

Ausgehend vom vorgenannten Stand der Technik ist es eine Aufgabe der vorliegenden Erfindung, die Dienstleistungserbringung in einem Servicemobil während der Fahrt zu ermöglichen bzw. zu verbessern.

### Offenbarung der Erfindung

Die vorgenannte Aufgabe wird erfindungsgemäß durch die Gegenstände der unabhängigen Ansprüche gelöst. Die Unteransprüche zeigen bevorzugte Weiterbildungen der Erfindung.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Weitere Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Dies schließt eine drahtlose Übertragung von Daten zwischen Fahrlafette und CAB jedoch nicht aus, wozu ebenfalls Schnittstellen vorgesehen sein können. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahrt erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern während der Reise eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein bzw. die gegenständliche Inneneinrichtung der CAB betreffen, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen senden, Suchergebnisse sichten, Servicemobile/Dienstleistungen buchen, Bewertungen abgeben sowie die gebuchten bzw. bezogenen Dienstleistungen bezahlen.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (z.B. Friseur gegenüber Multimedia-Darbietung)
- individualisierte CAB oder Massenware (z.B. generisches Restaurant gegenüber systemgastronomischer Ausgestaltung).

Zusammengefasst umfasst die der vorliegenden Technologie zugrundeliegende Fahrzeugarchitektur zumindest zwei gegenständliche Komponenten: Die zur Fortbewegung erforderliche Komponente wird als "Fahrlafette" bezeichnet, in welcher sich die Technik zum (autonomen) Fahren befinden kann. Zudem wird der Fahrzeugaufbau (CAB) verwendet, der alle Schnittstellen bereithält, um die zur Dienstleistungserbringung erforderliche, spezifische Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte SmartPhone-Plattformen.

Die vorliegende Erfindung löst die oben genannte Aufgabe insbesondere unter Verwendung der vorgenannten Offenbarung durch ein Verfahren zur Unterstützung einer Erbringung einer vordefinierten Dienstleistung in einem Fahrzeug während einer Fahrt des Fahrzeugs auf einer bevorstehenden Route. Die bevorstehende Route kann beispielsweise durch einen Anwenderwunsch (z.B. Eingabe einer Zieladresse) und/oder auf Basis eines digitalen Eintrags in einem Kalender des Anwenders oder eines anderen Voreintrags definiert sein. Insbesondere kann hierzu eine aktuelle Position des Anwenders als Startpunkt der bevorstehenden Route definiert werden. In einem ersten Schritt wird automatisch ein Kriterium zur erfolgreichen Erbringung der Dienstleistung ermittelt. Das Kriterium kann beispielsweise dahingehende Schlüsse zulassen, dass abrupt auftretende Beschleunigungen (in X-, Y- und/oder Z-Richtung) eine erfolgreiche oder gar sichere Erbringung der Dienstleistung gefährden würden. Mitunter kann die Erbringung der Dienstleistung durch entsprechende Kriterien auch vollständig vereitelt werden. Das Kriterium kann daher beispielsweise bei der Buchung der Dienstleistung/Mobilitätsdienstleistung an den Anwender übermittelt werden und von dessen Anwenderendgerät zur Berechnung einer entsprechenden Route verwendet werden. Alternativ oder zusätzlich kann das Kriterium von dem Servicemobil und/oder der CAB und/oder der Fahrlafette und/oder einem Server verwendet werden, um unabhängig von einem Anwenderendgerät eine Route zur Erbringung der kombinierten Dienstleistung (Mobilitätsdienstleistung und zusätzlich während der Fahrt zu erbringende Dienstleistung) zu berechnen. Hierzu werden ein Fahrzustand und/oder eine Fahrzeugsituation ermittelt, welche das Kriterium auf der Route verletzen. Mit anderen Worten kann aus einer Datenbank eine berechnete Route dahingehend untersucht werden, ob ihre Bestandteile Eigenschaften aufweisen, welche eine erfolgreiche, sichere Dienstleistungserbringung gefährden oder vereiteln oder andere Konflikte ermöglichen. Die Datenbank kann beispielsweise in digitaler Form bereitgehalten werden. Sie kann von einem Serviceprovider und/oder von Servicemobilen mit aktualisierten Informationen zu Routensegmenten gespeist werden. Im Ansprechen auf die Erkenntnis, dass das Kriterium zur erfolgreichen Erbringung der Dienstleistung durch die ermittelte Route bzw. sich im Zuge der Route einstellende Fahrzustände und/oder Fahrzeugsituationen verletzt würde, wird automatisch der Fahrzustand und/oder die Fahrzeugsituation zur Unterstützung der Erbringung der Dienstleistung gemieden. Mit anderen Worten kann eine alternative Route oder eine alternative Weise der Fortbewegung des Servicemobils auf der Route gewählt werden, so dass das Kriterium zur erfolgreichen Erbringung der Dienstleistung nicht verletzt wird. Hierbei kann beispielsweise ein statistisches Risiko einer negativen Beeinflussung der Dienstleistung ermittelt und im Ansprechen auf das Erreichen eines vordefinierten Risikos eine geänderte Fortbewegungsweise / andere Route gewählt werden. Alternativ oder zusätzlich kann eine automatische dynamische Anpassung des Fahrzustandes und/oder der Fahrzeugsituation erfolgen, um Verletzungen des Kriteriums im Laufe der Erbringung der Dienstleistung zu vermeiden. Sofern dies durch vordefinierte Routenkriterien nicht ausgeschlossen ist, kann durch eine vorübergehende Pause/Rast vermieden werden, dass ein vorübergehender Fahrzustand/eine vorübergehende Fahrzeugsituation, welche die zu erbringende Dienstleistung gefährden oder vereiteln würde, eintritt.

Es werden also ein System und eine Methode zur Berechnung einer mobilen On-Demand-Service-spezifischen Route, mit anderen Worten also ein dienstleistungsspezifisches Routing, vorgeschlagen, wodurch ein Service während einer Fahrt mit einem Servicemobil erbracht wird, ohne eine negative Beeinflussung durch die befahrenen Streckensegmente bzw. die dabei auftretenden Betriebszustände des Servicemobils auf die erbrachten Services zu riskieren. Im Ergebnis werden weder eine erfolgreiche Dienstleistungserbringung im Fortbewegungsmittel/Servicemodul noch der Kunde oder der Dienstleistungserbringer gefährdet.

Es ist ein Kerngedanke der vorliegenden Erfindung, eine während einer Fahrt zu erfüllende Dienstleistung zu ermitteln und die Anforderungen, welche die Dienstleistungserbringung während der Fahrt an die Fortbewegung und die übrigen Umstände der Fahrt stellt, automatisch zu berücksichtigen bzw. dafür Sorge zu tragen, dass die Dienstleistung während der Fahrt bestmöglich erbracht werden kann und durch die zeitgleiche Fortbewegung wenigstmöglich beeinträchtigt wird.

Die Unteransprüche zeigen bevorzugte Weiterbildungen der Erfindung.

Der Fahrzustand bzw. die Fahrzeugsituation kann beispielsweise vermieden werden, indem eine alternative Route in Betracht gezogen und anschließend verwendet wird, auf welcher der Fahrzustand bzw. die Fahrzeugsituation nicht auftreten/eintreten. Alternativ oder zusätzlich kann eine Führung des Fahrzeugs mit automatisch geänderten bzw. angepassten Führungsgrößen erfolgen. Beispielsweise kann eine Beschleunigung/Verzögerung vermieden werden, welche einen vordefinierten Grenzwert überschreitet bzw. überschreiten. Dies kann implizieren, dass die Führung einen größeren Abstand zu umliegenden Verkehrsteilnehmern im fließenden Verkehr einhält bzw. beim Anfahren von Kurven und von Lichtzeichenanlagen geringere Beschleunigungen/Verzögerungen wählt. Das Fahrzeug/die Fahrlafette können geeignete Dämpfereinstellungen wählen, um Erschütterungen bei der Erbringung diesbezüglich empfindlicher Dienstleistungen zu reduzieren. Allgemein können die Längs- und/oder die Querführung, die Motorsteuerung, Fahrwerkseinstellungen und Einstellungen der Heiz-/Klimaanlage angepasst werden, um ungeeignete Fahrzustände und/oder Fahrzeugsituationen zu vermeiden.

Die Erbringung der Dienstleistung kann beispielsweise sensorisch erkannt und/oder klassifiziert werden. Alternativ oder zusätzlich kann beispielsweise das Hantieren mit gefährlichen Gegenständen oder Flüssigkeiten z.B. durch eine Kamera mittels Mustererkennung ermittelt und/oder automatisch ein Kriterium zur erfolgreichen Erbringung der Dienstleistung abgeleitet werden. Die Kriterien der bevorstehenden Route können automatisch mit dem Kriterium der Dienstleistung abgeglichen und gegebenenfalls die Route bzw. die Führung des Fahrzeugs angepasst werden. Somit kann sich der Dienstleistungserbringer vollständig der Erbringung der Dienstleistung widmen, während der Anwender die Dienstleistung ungestört und in vollen Zügen genießen kann.

Die Fahrzeugsituation kann unterschiedlicher Natur sein und automatisch erfasst werden. Hierzu können Fahrzeugsensoren (Umgebungssensoren, Beschleunigungssensoren, Neigungssensoren, etc.) verwendet werden. Alternativ oder zusätzlich kann digitales Kartenmaterial verwendet werden, in welchem auf bestimmten Routenabschnitten entsprechende Eigenschaften zugeordnet sind, welche mit dem Dienstleistungskriterium vereinbar sind oder nicht. Ein Neigungssensor kann beispielsweise ein Überschreiten einer vordefinierten maximalen Neigung des Fahrzeugs für eine erfolgreiche Dienstleistungserbringung erfassen. Allgemein kann die Fahrzeugsituation eine Fahrzeugumgebung berücksichtigen und insbesondere eine Verfügbarkeit einer Kommunikationsinfrastruktur berücksichtigen. Überdies können Lärm-, Licht- und Wärmeemissionen entlang der vorausliegenden Route ermittelt und mit dem Kriterium zur erfolgreichen Dienstleistungserbringung abgeglichen werden. Auch die Luftfeuchtigkeit, Niederschlag, Straßenglätte und Schadstoffemissionen entlang der Route können beispielsweise drahtlos an das Fahrzeug kommuniziert und von diesem - wie oben beschrieben - ausgewertet werden. Alternativ oder zusätzlich können Umgebungssensoren zur Ermittlung der vorgenannten Umstände verwendet werden, welche das Fahrzeug mitführt. Alternativ oder zusätzlich können entsprechende Informationen in Abhängigkeit der Uhrzeit, der Jahreszeit oder des Wochentages in einem digitalen Datenspeicher abgelegt sein und zur Optimierung der Dienstleistungserbringung herangezogen werden.

Eine besonders verlässliche und umfangreiche Informations-/Datenbasis kann für die erfolgreiche Dienstleistungserbringung ermittelt werden, indem eine erfindungsgemäß ausgestaltete Fahrzeugflotte die Erkenntnisse zu Konflikten zwischen einem Kriterium zur Dienstleistungserbringung und einem Kriterium eines Fahrzustandes/einer Fahrzeugsituation während einer Erbringung der Dienstleistung ermittelt und diese zur Verwendung durch weitere Fahrzeuge bereitstellt. Hierzu kann das erste Fahrzeug ein Drahtlossignal senden, in welchem die den Konflikt begründenden Umstände/Kriterien genannt sind. Ein zweites Fahrzeug kann das Signal z.B. direkt, serververmittelt oder durch dritte Fahrzeuge vermittelt empfangen und zur Vermeidung des Konfliktes bei der Erbringung einer ähnlichen oder identischen Dienstleistung verwenden. Den diesbezüglichen Signalen können der Ort/die Zeit/der Wochentag zugeordnet sein, um die Erkenntnisse möglichst universell anwenden zu können.

Die Sensorik zur Ermittlung eines Routenkriteriums kann in einer Fahrlafette und/oder in einer CAB angeordnet sein. Entsprechend können die sensorisch ermittelten Informationen über eine reversible Datenkommunikationsschnittstelle zwischen der Fahrlafette und der CAB ausgetauscht werden, um entweder die Führung/Navigation des Fahrzeugs anzupassen und alternativ oder zusätzlich die Dienstleistungserbringung zu modifizieren, kurzzeitig auszusetzen oder eine Meldung an einen Kunden/Dienstleistungserbringer innerhalb der CAB auszugeben, dass mit vorübergehenden Einschränkungen der Dienstleistungserbringung zu rechnen ist bzw. erhöhte Vorsicht/Sorgfalt geboten ist, bis die Kriterien zur erfolgreichen Dienstleistungserbringung durch die Fahrsituation/den Fahrzeugzustand wieder (besser) erfüllt werden.

Die im Rahmen der vorliegenden Dienstleistung durch eine geeignete Fahrzeugführung/Routenführung/Fahrzeugsituation unterstützte Dienstleistung kann beispielsweise die Bereitstellung einer Telekommunikationsleitung umfassen. Hierzu kann als Routenkriterium sichergestellt werden, dass eine hinreichende Abdeckung durch eine Telekommunikations-Infrastruktur gewährleistet ist. Sofern z.B. eine Nagelpflege oder eine Wellness-Behandlung anstehen, können insbesondere unerwartete oder abrupte Beschleunigungen vermieden werden, um eine Verletzungsgefahr für den Dienstleistungskonsumenten zu verringern bzw. Stress desselben zu vermeiden. Aber auch qualitative Routenkriterien wie z.B. die Umgebungsqualität, das Umgebungsambiente oder Umgebungsobjekte können erfindungsgemäß bei der Routenplanung berücksichtigt werden. Beispielsweise kann während einer Finanzberatung als Dienstleistung eine Route durch teure Stadtviertel gegenüber einer Route durch Sozialbausiedlungen, bevorzugt werden. Während eines Gespräches über Immobilienkäufe oder Finanzplanung kann die Route automatisch entlang Objekten des Interesses oder generell an derartigen Objekten vorbeiführen, die einen erstrebenswerten Status/Vermögen ausdrücken (Gebäude, Landschaften usw., Stadteile). Alternativ oder zusätzlich kann die Route dynamisch (z.B. hinter einem attraktiven Fahrzeug oder neben demselben) verlaufen.

Sofern die Dienstleistung gastronomischer Natur ist, können unerwartete Beschleunigungen und abrupte Fahrmanöver, Bodenwellen, enge Kurven bei relativ hohen Geschwindigkeiten, etc., vermieden werden, um das Verschütten von Nahrungsmitteln bzw. ein Umherschleudern von Messern und anderen gefährlichen Gegenständen zu vermeiden. Unerwartete, abrupte Beschleunigungen sind auch bei der Erbringung einer Haarpflege/Frisierdienstleistung zu vermeiden, um eine Verletzung des Dienstleistungskonsumenten und ein Verschütten von Pflegeprodukten zu vermeiden. Eine Multimediadarbietung (z.B. Telefonat, online Gaming oder Videokonferenz) als Dienstleistung kann insbesondere von einer Verfügbarkeit einer Mindestdatennetzabdeckung abhängen, so dass diese als Routenkriterium in erfindungsgemäßer Weise durch geeignete Routenführung sichergestellt werden kann. Entsprechendes gilt für eine Darbietung virtueller Realität, wobei bei dieser auch mit der virtuellen Realität nicht in inhaltlichem Zusammenhang stehende Beschleunigungen des Fortbewegungsmittels zu vermeiden sind, um eine Kinetose der Anwender zu vermeiden.

Sofern das Kriterium für die Route/Fahrzeugführung/Fahrzeugsituation lediglich für eine vordefinierte Phase der Dienstleistung gilt, kann das Meiden des Fahrzeugzustandes für die vordefinierte Phase der Dienstleistung sichergestellt werden, ohne dass übrige Phasen der Dienstleistung zur Einschränkung ansonsten geeigneter Fahrzustände/Fahrzeugsituationen/ Routen (Abschnitte) führen. Beispielsweise kann das Vorbereiten einer Speise in einer geeignet eingerichteten CAB vergleichsweise geringe Anforderungen an die Routenführung/die Fahrzustände des Fortbewegungsmittels stellen, während die aufgetischten Speisen bei ungeeigneten Fahrmanövern/Bodenwellen unweigerlich verschüttet würden. Durch die selektive Sicherstellung entsprechender Kriterien kann eine höhere Anwenderakzeptanz zur Anpassung der Fahrzustände und Fahrzeugsituationen an die Erfordernisse der Dienstleistung erfolgen.

Gemäß einem zweiten Aspekt der vorliegenden Erfindung wird ein Fahrerassistenzsystem vorgeschlagen, welches einen Dateneingang, eine Auswerteeinheit und einen Datenausgang umfasst. Der Dateneingang ist beispielsweise als Busteilnehmer ausgestaltet und/oder eingerichtet, Informationen betreffend eine anstehende/bestellte Dienstleistung zu empfangen sowie einen Fahrzustand und/oder eine Fahrzeugsituation, welche aufgrund der Fahraufgabe bzw. des Fahrtzwecks naheliegend erscheinen, jedoch das Kriterium auf der Route verletzt bzw. verletzen, zu ermitteln. Hierzu kann der Dateneingang beispielsweise über eine Drahtloskommunikationsschnittstelle mit fahrzeugexternen oder fahrzeugbasierten Datenspeichern kommunizieren. Die Auswerteeinheit kann beispielsweise als elektronisches Steuergerät, programmierbarer Prozessor, Mikroprozessor o.ä. ausgestaltet sein. Dieses ist eingerichtet, über den Datenausgang zu veranlassen, dass der Fahrzustand und/oder die Fahrsituation zur Unterstützung der Erbringung der Dienstleistung gemieden werden. Auch der Datenausgang kann als Busteilnehmer ausgestaltet sein und alternativ oder zusätzlich mit einem Fahrroboter des Fahrzeugs kommunizieren bzw. diesen anweisen. Im einfachsten Fall wird eine Routenneuberechnung veranlasst, welche das Kriterium/ die Voraussetzung zur erfolgreichen Erbringung der Dienstleistung besser erfüllt. Alternativ oder zusätzlich können Einstellungen des Antriebstrangs, des Fahrwerks und/oder der Fahrzeuglängs- bzw. - querführung angepasst werden, um das Kriterium besser zu erfüllen. Im Ergebnis werden durch das Fahrerassistenzsystem die Merkmale, Merkmalskombinationen und die sich aus diesen ergebenden Vorteile des erfindungsgemäßen Verfahrens derart ersichtlich in entsprechender Weise verwirklicht, so dass zur Vermeidung von Wiederholungen auf die obigen Ausführungen verwiesen wird.

Gemäß einen drittgenannten Erfindungsaspekt wird ein Computerprogramm vorgeschlagen, welches Instruktionen umfasst, welche, wenn sie auf einer Auswerteeinheit eines Fahrerassistenzsystems gemäß dem zweitgenannten Erfindungsaspekt ausgeführt werden, das Fahrerassistenzsystem veranlassen, die Schritte eines Verfahrens gemäß dem erstgenannten Erfindungsaspekt auszuführen. Das Computerprogrammprodukt kann beispielsweise als CD, DVD, USB-Stick, Flash-Speicher, Cache, Festplatte, o.ä., ausgestaltet sein.

Gemäß einem vierten Aspekt der vorliegenden Erfindung wird eine Signalfolge vorgeschlagen, welche Instruktionen repräsentiert, welche, wenn sie auf einer Auswerteeinheit eines Fahrerassistenzsystems gemäß dem zweitgenannten Erfindungsaspekt ausgeführt werden, das Fahrerassistenzsystem veranlassen, die Schritte eines Verfahrens gemäß dem erstgenannten Erfindungsaspekt auszuführen. Auch bezüglich der Signalfolge wird zu den Merkmalen, Merkmalskombinationen und Vorteilen auf die obigen Ausführungen verwiesen, um Wiederholungen zu vermeiden.

Gemäß einem fünften Aspekt der vorliegenden Erfindung wird ein Fahrzeug vorgeschlagen, welches insbesondere eine Fahrlafette und eine reversibel mit der Fahrlafette verbundene, dienstleistungsspezifisch ausgestaltete Fahrgastzelle (auch "CAB") umfasst. Insbesondere weist die CAB dienstleistungsspezifische Einrichtungen auf, welche in üblichen Fahrzeugen nicht enthalten sind. Das Fahrzeug weist in jedem Fall ein Fahrerassistenzsystem gemäß dem zweitgenannten Erfindungsaspekt auf und ist alternativ oder zusätzlich eingerichtet, ein Verfahren gemäß dem erstgenannten Erfindungsaspekt auszuführen.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze veranschaulichend im Rahmen der vorliegenden Erfindung verwendbare Ausführungsbeispiele für CABs in Verbindung mit einer Fahrlafette, um ein Servicemobil im Sinne der hier offenbarten Technologie zu bilden;
- Figur 2: eine schematische Darstellung eines Plattform-Ökosystems zur Veranschaulichung von Informationsflüssen bei der Realisierung der hier offenbarten Technologie;
- Figur 3: eine schematische Darstellung einer Fahrlafette, zweier CABs und ihrer gegenseitigen Schnittstellen gemäß einem Ausführungsbeispiel der hier offenbarten Technologie;
- Figur 4: eine schematische Darstellung einer Fahrzeugsituation/eines Fahrzeugzustandes, welche es erfindungsgemäß zur Erfüllung eines dienstleistungsspezifischen Routenkriteriums zu vermeiden gilt;
- Figur 5: eine Routenführung eines erfindungsgemäß ausgestalteten Fortbewegungsmittels, wobei entlang der Route Situationen zu erwarten sind, welche für einzelne Dienstleistungen (z.B. Wellness, romantisches Abendessen) ungeeignet erscheinen; und
- Figur 6: ein Flussdiagramm veranschaulichend Schritte eines Ausführungsbeispiels eines erfindungsgemäßen Verfahrens zur Unterstützung einer Erbringung einer vordefinierten Dienstleistung in einem Fahrzeug während einer Fahrt.

### Ausführungsformen der Erfindung

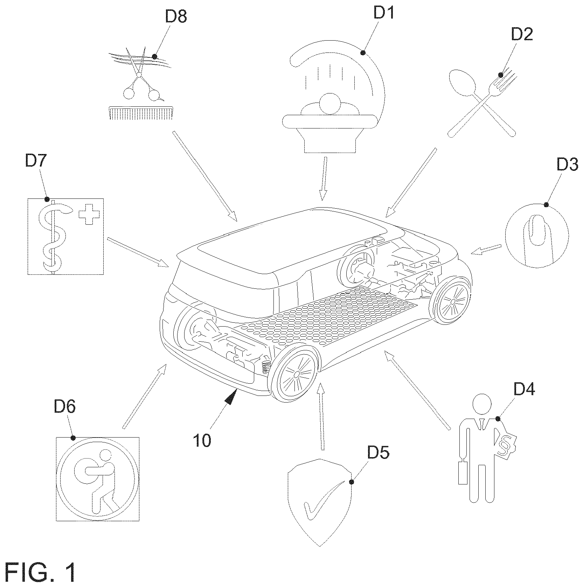

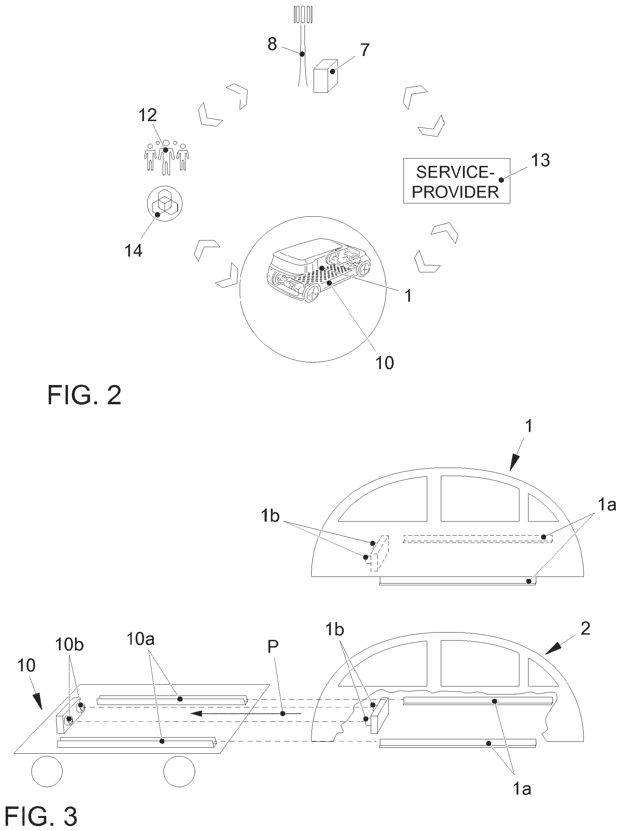

Figur 1 zeigt eine schematische Darstellung einer Fahrlafette 10 eines Servicemobils gemäß einem Ausführungsbeispiel der hier offenbarten Technologie. Die Fahrlafette bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. genannt. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierzu Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung/Einrichtung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarewaschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 individualisiert die CABs 1 der Servicemobile, welche anschließend mit einer jeweiligen Fahrlafette 10 (temporär oder dauerhaft) verbunden und bereitgestellt werden. Die Vermittlung der Servicemobile wird von einem Serviceprovider 13 übernommen, welcher über einen Server 7 und beispielsweise einen Funkturm 8 eines Drahtloskommunikationsnetzwerkes den Bedarf der Anwender 12 ermittelt und mit den angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Der Micro-Service-Provider 14 kann auch die einzelne Dienstleistung bzw. ein Dienstleistungspaket vor dem Endkunden erbringen und hierzu den Betrieb des Servicemobils bzw. der CAB überwachen und sicherstellen oder gar an Bord des Servicemobils eine manuelle Dienstleistung in einem bemannten Servicemobil erbringen. Selbstverständlich muss der Serviceprovider 14 nicht identisch mit dem Hersteller/Ausstatter der CAB 1 sein. Diesbezüglich ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1b, 10b an den CABs 1, 2 und der Fahrlafette 10 angeordnet, welche ebenfalls in Richtung eines Pfeils P miteinander in Eingriff gebracht werden. Alternativ oder zusätzlich können (im Zuge dessen) in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

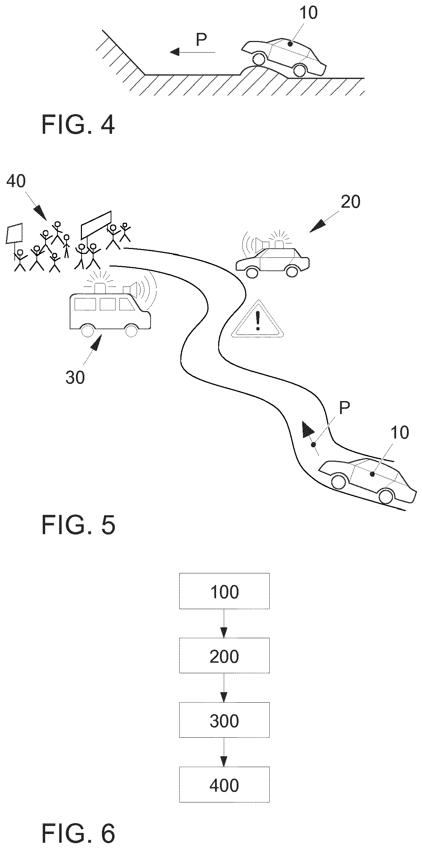

Figur 4 zeigt ein Ausführungsbeispiel eines erfindungsgemäß ausgestalteten Fahrzeugs mit einer Fahrlafette 10, welches über eine Bodenwelle fährt. Um zu vermeiden, dass z.B. im Inneren der (nicht gesondert dargestellten) CAB aufgetischte Speisen und Getränke verschüttet werden, sollte die dargestellte Situation ebenso wie eine dem Fortbewegungsmittel in Richtung des Pfeils P bevorstehende Fahrt auf der schiefen Ebene erspart bleiben. Eine Routenneuberechnung zur Vermeidung der dargestellten Fahrzeugsituation kann hier Abhilfe schaffen. Sofern dies nicht möglich oder nicht zweckdienlich ist, kann im Vorlauf der dargestellten Situation eine Anpassung der Längsführung des Fahrzeugs vorgenommen werden, um z.B. die Bodenwelle besonders langsam zu passieren. Alternativ oder zusätzlich kann bei langsamen Geschwindigkeiten die adaptive Anpassung der Dämpfer eines Luftfahrwerks und/oder eines Gewindefahrwerks in gewissem Rahmen Abhilfe schaffen. Zumindest aber kann eine Mitteilung an die Insassen des Fahrzeugs ausgegeben werden, durch welche diese zur besonderen Vorsicht in Verbindung mit dem bevorstehenden Verletzen des Dienstleistungskriteriums aufgefordert werden.

Figur 5 zeigt eine Strecke, welches ein Ausführungsbeispiel eines erfindungsgemäß ausgestalteten Fortbewegungsmittels mit einer Fahrlafette 10 zu befahren hat, entlang welcher mitunter unangenehme Situationen aufwarten. Ein Streifenwagen 20 verkündet Lautsprecheransagen, welche als Lärmemission für die Insassen des Fahrzeugs zu Komforteinbußen während der Erbringung der Dienstleistung führen können. Des Weiteren wird ein Demonstrantenzug 40 durch einen Mannschaftstransportwagen 30 begleitet, wodurch zusätzliche lärm- und intervallartige Lichtemissionen beim Passieren der in Richtung des Pfeils P bevorstehenden Strecke zu erwarten sind. Eine Routenneuberechnung kann hier Abhilfe schaffen und eine erfolgreiche Erbringung der Dienstleistung (z.B. Wellnessbehandlung) während der Fahrt sicherstellen.

Figur 6 zeigt Schritte eines Ausführungsbeispiels eines erfindungsgemäßen Verfahrens zur Unterstützung einer Erbringung einer vordefinierten Dienstleistung in einem Fahrzeug während einer Fahrt des Fahrzeugs auf einer bevorstehenden Route. In Schritt 100 wird sensorisch eine Erbringung einer Dienstleistung im Fahrzeug ermittelt. Beispielsweise wird über eine optische Innenraumkamera innerhalb der verwendeten CAB ermittelt, dass ein Haarschnitt erfolgt. In Schritt 200 wird in einer lokalen Datenbank eine Suche nach Kriterien, welche der Dienstleistung "Haarschnitt" zugeordnet sind, ausgeführt. Ein solches Kriterium kann beispielsweise sein, dass jegliche abrupte Beschleunigungen oberhalb eines vordefinierten Schwellwertes zu vermeiden sind und das vor dem Überschreiten der Schwellenwerte die Dienstleistung zu unterbrechen ist. Für jede der Beschleunigungsrichtungen können hierbei unterschiedliche Schwellenwerte hinterlegt sein, so dass für die drei Hauptfahrzeugrichtungen (X, Y und Z) jeweilige Grenzwerte bzw. Schwellenwerte als Kriterien hinterlegt sind. Bei der Ermittlung der Route, welche unabhängig von der während der Fahrt erbrachten Dienstleistung den Fahrtzweck am besten erfüllt, wird ermittelt, dass ein Fahrzustand zu erwarten ist, welcher das Kriterium verletzt. Mit anderen Worten werden Eigenschaften der zunächst errechneten Route mit den Kriterien für die Dienstleistung "Haarschnitt" abgeglichen und ermittelt, dass diese miteinander nicht harmonieren. Daher wird in Schritt 400 der problematische Fahrzustand zur Unterstützung der Erbringung der Dienstleistung gemieden, indem eine Routenneuberechnung unter Umgehung derjenigen Routenabschnitte erfolgt, welche andernfalls während kritischer Phasen des Haarschnitts befahren würden. Beispielsweise kann das Lackieren der Fingernägel nur bei sehr ruhiger Fahrt erfolgen, wohingegen die Beratung zur Maniküre bzw. eine Farbauswahl auch während des Befahrens eines Kopfsteinpflasters möglich wäre.

Wenn im Rahmen der vorliegenden Offenbarung von einem "Ermitteln" eines Fahrzustandes, welcher das Kriterium auf der Route verletzt, gesprochen wird, so ist hierunter auch eine Ermittlung eines hinreichenden Risikos bzw. eines kritischen Erwartungswertes zur negativen Beeinflussung der Dienstleistungserbringung zu verstehen.

Zudem wird die Ermittlung des Fahrzustandes bzw. der Fahrzeugsituation optional auf car-toinfrastructure (C2X)- bzw. car-to-car (C2C)-Kommunikation und entsprechende Erkenntnisse gefußt. Die Dienste könne in Dienst-Segmente gegliedert werden, welche unterschiedliche Anforderungen an die zu kombinierenden Streckensegmente entsprechend dem Fahrtzweck aufweisen. Die verwendbaren Streckensegmente (Streckennetz-Datenbank) können beispielsweise durch die Gesamtheit der (in einer Fahrzeugflotte) auf der Straße befindlichen Fahrzeugsensoren mit Informationen über Fahrzustände bzw. Fahrzeugsituationen angereichert werden, so dass rasch eine reichhaltige Datenbasis für die erfindungsgemäße Unterstützung einer Erbringung einer vordefinierten Dienstleistung in einem Fahrzeug während einer Fahrt des Fahrzeugs erfolgen kann. Hierzu können insbesondere in Abhängigkeit der jeweils erbrachten Dienstleistung eine erfolgreiche Erbringung der Dienstleistung oder Probleme, welche während der Erbringung der Dienstleistung aufgrund der zeitgleichen Fahrzeugsituationen aufgetreten sind, protokolliert werden. Entsprechend kann die Art und Weise, in welcher gegebenenfalls verletzte Kriterien auf der Route ermittelt werden, mit der Zeit rasch verbessert werden.

Im Rahmen der vorliegenden Erfindung kann der Endkunde die Parameter für die Serviceerbringung ebenso wie die Parameter der Mobilitätsdienstleistung (Fahrt vom Startpunkt zum Zielpunkt, gewünschte Abfahrtszeit, gewünschte Ankunftszeit, etc.) unabhängig voneinander im Rahmen der Bestellung definieren. Eine automatische Harmonisierung der vorgenannten Vorgaben durch den Endkunden ermöglicht eine erfolgreiche und damit maximale Kundenzufriedenheit generierende Erbringung der Dienstleistung.

### Bezugszeichenliste

- 1: erste CAB
- 1a: mechanische Schnittstelle der CAB
- 1b: informationstechnische/energetische Schnittstelle der CAB
- 2: zweite CAB
- 7: Server
- 8: Funkturm
- 10: Fahrlafette
- 10a: mechanische Schnittstelle der Fahrlafette
- 10b: energetische/informationstechnische Schnittstelle der Fahrlafette
- 12: Anwender
- 13: Serviceprovider
- 14: Micro-Service-Provider
- 20: Streifenwagen
- 30: Mannschaftswagen
- 40: Demonstrantenzug
- 100-400: Verfahrensschritte
- D1-D8: Dienstleistungen
- P: Pfeil

## Patentansprüche

1. Verfahren zur Unterstützung einer Erbringung einer vordefinierten Dienstleistung (D1-D8) in einem Fahrzeug während einer autonomen Fahrt des Fahrzeugs auf einer bevorstehenden Route umfassend die Schritte:
- Automatisches Ermitteln (200) eines Kriteriums zur erfolgreichen Erbringung der Dienstleistung (D1-D8),
- Ermitteln (300) eines Fahrzustandes und/oder einer Fahrzeugsituation, welche das Kriterium unter autonomer Fahrzeugführung auf der Route verletzt bzw. verletzen und
- automatisches Meiden (400) des Fahrzustandes und/oder der Fahrzeugsituation unter autonomer Fahrzeugführung zur Unterstützung der Erbringung der Dienstleistung (D1-D8).

2. Verfahren nach Anspruch 1, wobei das Meiden des Fahrzustandes und/oder der Fahrzeugsituation
- ein Verwenden einer alternativen Route und/oder
- eine Führung des Fahrzeugs mit automatisch geänderten Führungsgrößen, insbesondere
- eine Beschleunigung und/oder
- Dämpfereinstellung und/oder
- Längs- und/oder Querführung und/oder
- Motorsteuerung und/oder
- Fahrwerkseinstellung und/oder
- Heiz-/Klimaanlage
umfasst.

3. Verfahren nach Anspruch 1 oder 2, weiter umfassend
- sensorisches Erkennen (100) einer Dienstleistungserbringung im Fahrzeug und
- automatisches Ermitteln (200) des Kriteriums der Dienstleistung.

4. Verfahren nach einem der vorstehenden Ansprüche, wobei die Fahrzeugsituation eine Fahrzeugumgebung berücksichtigt und insbesondere durch
- eine Verfügbarkeit einer Kommunikationsinfrastruktur
- eine Lärm- und/oder Lichtemission und/oder
- Wärmeemissionen und/oder
- Luftfeuchtigkeit und/oder
- Emissionen in Abhängigkeit der Uhrzeit und/oder Jahreszeit
entlang der Route gekennzeichnet ist.

5. Verfahren nach einem der vorstehenden Ansprüche weiter umfassend
- Ermitteln eines Konfliktes zwischen einem Kriterium einer Dienstleistung (D1-D8) und einem Kriterium eines Fahrzustandes und/oder einer Fahrzeugsituation während einer Erbringung einer Dienstleistung (D1-D8) während einer Fahrt eines ersten Fahrzeugs und im Ansprechen darauf
- Senden eines Signal repräsentierend den Konflikt, um ein zweites Fahrzeug auf den Konflikt hinzuweisen.

6. Verfahren nach Anspruch 5, wobei das Kriterium der Route mittels eines Sensors des Fahrzeugs ermittelt und über eine Datenkommunikationsschnittstelle (8) an einen stationären Server (7) und/oder eine reversibel mit einer Fahrlafette (10) des Fahrzeugs verbundene dienstleistungsspezifisch ausgestaltete Fahrgastzelle (1, 2), nachfolgend "CAB (1, 2)" genannt, übermittelt wird.

7. Verfahren nach einem der vorstehenden Ansprüche, wobei die Dienstleistung (D1-D8)
- eine Verwendung potentiell gefährlicher Gegenstände und/oder Flüssigkeiten und/oder
- eine Datenkommunikation
erfordert.

8. Verfahren nach einem der vorstehenden Ansprüche, wobei die Dienstleistung (D1-D8)
- eine Bereitstellung einer Telekommunikationsleitung und/oder
- eine Nagelpflege und/oder
- eine Wellnessbehandlung und/oder
- eine Finanz- und/oder Versicherungsberatung und/oder
- eine Dienstleistung gastronomischer Natur und/oder
- eine Nachhilfe und/oder
- ein Makeln von Immobilien und/oder
- eine Rechtsberatung und/oder
- eine Stadtverwaltung und/oder
- ein Coaching und/oder
- einen Außendienst und/oder
- eine Haarpflege und/oder
- eine Multimediadarbietung und/oder
- ein Anbieten und/oder Verkaufen von Waren und/oder
- eine Erstellung von 3D-Druck-Erzeugnissen und/oder
- eine Darbietung virtueller Realität
umfasst.

9. Verfahren nach einem der vorstehenden Ansprüche, wobei das Kriteriums lediglich für eine vordefinierte Phase der Dienstleistung (D1-D8) gilt und
- das Meiden des Fahrzustandes und/oder der Fahrzeugsituation zur Unterstützung der Erbringung der Dienstleistung (D1-D8) nur für die vordefinierte Phase der Dienstleistung (D1-D8) erfolgt.

10. Verfahren nach einem der vorstehenden Ansprüche, wobei die Dienstleistung (D1-D8) vorab in Phasen gegliedert wird, welchen wiederum jeweilige, voneinander zumindest anteilig unterschiedliche Kriterien zugeordnet werden.

11. Fahrerassistenzsystem zur Unterstützung einer Erbringung einer vordefinierten Dienstleistung (D1-D8) in einem Fahrzeug während einer autonomen Fahrt des Fahrzeugs auf einer bevorstehenden Route umfassend
- einen Dateneingang
- eine Auswerteeinheit und
- einen Datenausgang, wobei
die Auswerteeinheit eingerichtet ist,
- in Verbindung mit dem Dateneingang automatisch ein Kriterium zur erfolgreichen Erbringung der Dienstleistung (D1-D8) und einen Fahrzustand und/oder eine Fahrzeugsituation, welche das Kriterium unter autonomer Fahrzeugführung auf der Route verletzt bzw. verletzen, zu ermitteln und
- in Verbindung mit dem Datenausgang ein automatisches Meiden des Fahrzustandes und/oder der Fahrzeugsituation unter autonomer Fahrzeugführung zur Unterstützung der Erbringung der Dienstleistung (D1-D8) zu veranlassen.

12. Computerprogrammprodukt umfassend Instruktionen, welche, wenn sie auf einer Auswerteeinheit eines Fahrerassistenzsystems ausgeführt werden, das Fahrerassistenzsystem veranlassen, die Schritte eines Verfahrens gemäß einem der vorstehenden Ansprüche 1 bis 10 auszuführen.

13. Signalfolge repräsentierend Instruktionen, welche, wenn sie auf einer Auswerteeinheit eines Fahrerassistenzsystems ausgeführt werden, das Fahrerassistenzsystem veranlassen, die Schritte eines Verfahrens gemäß einem der vorstehenden Ansprüche 1 bis 10 auszuführen.

14. Fahrzeug, insbesondere umfassend eine Fahrlafette (10) und eine reversibel mit der Fahrlafette (10) verbundene dienstleistungsspezifisch ausgestaltete Fahrgastzelle (1, 2), welches ein Fahrerassistenzsystem gemäß dem vorstehenden Anspruch 11 aufweist.

## Claims

1. Method for assisting provision of a predefined service (D1-D8) in a vehicle while the vehicle is travelling autonomously on an imminent route, comprising the steps:
- automatically determining (200) a criterion for the successful provision of the service (D1-D8),
- determining (300) a driving status and/or a situation of the vehicle which infringe/infringes the criterion with autonomous vehicle control on the route, and
- automatically avoiding (400) the driving status and/or the situation of the vehicle with autonomous vehicle control in order to assist the provision of the service (D1-D8).

2. Method according to Claim 1, wherein the avoidance of the driving status and/or of the situation of the vehicle comprises
- using an alternative route and/or
- controlling the vehicle with automatically modified control variables, in particular
- an acceleration and/or
- shock absorber settings and/or
- longitudinal guidance and/or transverse guidance and/or
- engine control and/or
- chassis setting and/or
- heating/air conditioning system.

3. Method according to Claim 1 or 2, also comprising
- detecting (100) the provision of a service in the vehicle by sensor, and
- automatically determining (200) the criterion of the service.

4. Method according to one of the preceding claims, wherein the situation of the vehicle takes into account the surroundings of the vehicle and, in particular, is **characterized by**
- availability of a communication infrastructure,
- noise emissions and/or light emissions and/or
- thermal emissions and/or
- air humidity and/or
- emissions as a function of the time of day and/or time of year,
along the route.

5. Method according to one of the preceding claims, also comprising
- determining a conflict between a criterion of a service (D1-D8) and a criterion of a driving status and/or a situation of the vehicle during provision of a service (D1-D8) while a first vehicle is travelling, and in response thereto
- transmitting a signal representing the conflict, in order to alert a second vehicle to the conflict.

6. Method according to Claim 5, wherein the criterion of the route is determined by means of a sensor of the vehicle and is transmitted via a data communication interface (8) to a stationary server (7) and/or a passenger cell (1, 2), referred to below as "CAB (1, 2)" which is connected in a reversible fashion to a vehicle carrier (10) of the vehicle and is embodied in a service-specific fashion.

7. Method according to one of the preceding claims, wherein the service (D1-D8) requires
- use of potentially hazardous objects and/or liquids and/or
- data communication.

8. Method according to one of the preceding claims, wherein the service (D1-D8) comprises
- making available a telecommunication line and/or
- a nail care service and/or
- a wellness treatment and/or
- a financial advice and/or insurance advice service and/or
- a service of a gastronomic nature and/or
- a private tuition service and/or
- a real estate service and/or
- a legal advice service and/or
- a city administration service and/or
- a coaching service and/or
- a field service and/or
- a hairdressing service and/or
- a multimedia presentation and/or
- offering and/or sales of goods and/or
- production of 3D printed products and/or
- virtual reality presentations.

9. Method according to one of the preceding claims, wherein the criterion applies only to a predefined phase of the service (D1-D8) and
- the avoidance of the driving status and/or of the situation of the vehicle in order to assist the provision of the service (D1-D8) occurs only for the predefined phase of the service (D1-D8).

10. Method according to one of the preceding claims, wherein the service (D1-D8) is divided up in advance into phases, to which respective criteria which are at least proportionally different from one another are in turn assigned.

11. Driver assistance system for assisting provision of a predefined service (D1-D8) in a vehicle while the vehicle is travelling autonomously on an imminent route, comprising
- a data input
- an evaluation unit and
- a data output, wherein
the evaluation unit is configured
- to determine automatically, in conjunction with the data input, a criterion for the successful provision of the service (D1-D8) and a driving status and/or a situation of the vehicle which infringe/infringes the criterion with autonomous vehicle control on the route, and
- to bring about, in conjunction with the data output, automatic avoidance of the driving status and/or of the situation of the vehicle with autonomous vehicle control in order to assist the provision of the service (D1-D8).

12. Computer program product comprising instructions which, when executed on an evaluation unit of a driver assistance system, cause the driver assistance system to execute the steps of a method according to one of preceding Claims 1 to 10.

13. Signal sequence representing instructions which, when executed on an evaluation unit of a driver assistance system, cause the driver assistance system to execute the steps of a method according to one of preceding Claims 1 to 10.

14. Vehicle, in particular comprising a vehicle carrier (10) and a passenger cell (1, 2), which is connected in reversible fashion to the vehicle carrier (10), is embodied in a service-specific fashion and has a driver assistance system according to preceding Claim 11.

## Revendications

1. Procédé de prise en charge de la prestation d'un service prédéfini (D1-D8) dans un véhicule lors d'un trajet autonome du véhicule sur un itinéraire à venir, ledit procédé comprenant les étapes suivantes :
- déterminer automatiquement (200) un critère de prestation réussie du service (D1-D8),
- déterminer (300) un état de conduite et/ou une situation de véhicule qui enfreignent le critère lors d'un guidage de véhicule autonome sur l'itinéraire et
- éviter automatiquement (400) l'état de conduite et/ou la situation du véhicule lors du guidage autonome du véhicule afin de prendre en charge la prestation du service (D1-D8).

2. Procédé selon la revendication 1, l'évitement de l'état de conduite et/ou de la situation du véhicule comprenant les opérations suivantes
- utiliser un itinéraire alternatif et/ou
- guider le véhicule avec des grandeurs de guidage modifiées automatiquement, en particulier
- un réglage d'accélération et/ou
- d'amortissement et/ou
- un guidage longitudinal et/ou transversal et/ou
- une commande de moteur et/ou
- un réglage de mécanisme de roulement et/ou
- un système de chauffage/climatisation.

3. Procédé selon la revendication 1 ou 2, comprenant en outre les opérations suivantes
- effectuer une reconnaissance sensorielle (100) d'une prestation de service dans le véhicule et
- déterminer automatiquement (200) le critère du service.

4. Procédé selon l'une des revendications précédentes, la situation du véhicule prenant en compte un environnement de véhicule et notamment étant **caractérisée par**
- une disponibilité d'une infrastructure de communication
- une émission sonore et/ou lumineuse et/ou
- des émissions de chaleur et/ou
- une humidité de l'air et/ou
- des émissions en fonction de l'heure et/ou de la saison le long de l'itinéraire.

5. Procédé selon l'une des revendications précédentes comprenant en outre les opérations suivantes
- déterminer un conflit entre un critère d'un service (D1-D8) et un critère d'un état de conduite et/ou d'une situation de véhicule lors de la prestation d'un service (D1-D8) pendant qu'un premier véhicule roule et en réponse
- envoyer un signal représentant le conflit afin de notifier le conflit à un deuxième véhicule.

6. Procédé selon la revendication 5, le critère de l'itinéraire étant déterminé au moyen d'un capteur du véhicule et transmis par le biais d'une interface de communication de données (8) à un serveur fixe (7) et/ou un habitacle (1, 2), ci-après dénommé « CAB (1. 2) », qui est conçu de manière spécifique au service et qui est relié à un tracteur (10) du véhicule.

7. Procédé selon l'une des revendications précédentes, le service (D1-D8) nécessitant
- l'utilisation d'objets et/ou de liquides potentiellement dangereux et/ou
- une communication de données.

8. Procédé selon l'une des revendications précédentes, le service (D1-D8) comprenant
- la fourniture d'une ligne de télécommunications et/ou
- des soins des ongles et/ou
- des soins de bien-être et/ou
- des conseils financiers et/ou d'assurance et/ou
- un service de caractère gastronomique et/ou
- une assistance et/ou
- un courtage immobilier et/ou
- un conseil juridique et/ou
- une administration communale et/ou
- un coaching et/ou
- un service extérieur et/ou
- des soins capillaires et/ou
- une présentation multimédia et/ou
- une offre et/ ou une vente de marchandises et/ou
- une création de produits imprimés en 3D et/ou
- une présentation de réalité virtuelle.

9. Procédé selon l'une des revendications précédentes, le critère ne s'appliquant qu'à une phase prédéfinie du service (D1-D8) et
- l'évitement de l'état de conduite et/ou de la situation du véhicule pour prendre en charge la prestation du service (D1-D8) n'étant effectué que pour la phase prédéfinie du service (D1-D8).

10. Procédé selon l'une des revendications précédentes, le service (D1-D8) étant préalablement découpé en phases auxquelles sont associées des critères respectifs au moins partiellement différents les uns des autres.

11. Système d'aide à la conduite destiné à prendre en charge la prestation d'un service prédéfini (D1-D8) dans un véhicule lors d'un trajet autonome du véhicule sur un itinéraire à venir, ledit système comprenant
- une entrée de données
- une unité d'évaluation et
- une sortie de données,
l'unité d'évaluation étant conçue
- pour déterminer automatiquement, en relation avec l'entrée de données, un critère de prestation réussie du service (D1-D8) et un état de conduite et/ou une situation de véhicule qui enfreignent le critère lors du guidage autonome du véhicule sur l'itinéraire et
- pour ordonner en relation avec la sortie de données un évitement automatique de l'état de conduite et/ou de la situation du véhicule lors d'un guidage autonome du véhicule afin de prendre en charge la prestation du service (D1-D8).

12. Progiciel comprenant des instructions qui, lorsqu'elles sont exécutées sur une unité d'évaluation d'un système d'aide à la conduite, ordonnent au système d'aide à la conduite de réaliser les étapes d'un procédé selon l'une des revendications précédentes 1 à 10.

13. Séquence de signaux représentant des instructions qui, lorsqu'elles sont exécutées sur une unité d'évaluation d'un système d'aide à la conduite, ordonnent au système d'aide à la conduite de réaliser les étapes d'un procédé selon l'une des revendications précédentes 1 à 10.

14. Véhicule, comprenant notamment un tracteur (10) et un habitacle (1, 2) qui est conçu spécifiquement pour le service et qui est relié de manière réversible à la remorque (10), lequel véhicule comporte un système d'aide à la conduite selon la revendication précédente 11.
